# EUROPEAN PATENT APPLICATION

(11) **EP 2 230 595 A1**
(43) Date of publication of application: **22.09.2010**
(21) Application number: 09003991.8
(22) Date of filing: 20.03.2009
(51) Int. Cl.: G06F 9/44

(54) **User interaction coordination in distributed unlike environments**

(71) Applicant: EADS Deutschland GmbH, 85521 Ottobrunn (DE)
(72) Inventor: Hoche, Michael, Dr., 88090 Immenstaad (DE)
(74) Representative: Meel, Thomas

(57) **Abstract**

The invention relates to a method for coordinating user interactions by providing a user interface comprising presentation and interaction objects reflecting a model of information objects of a software system, where the presentation and interaction objects provide homogenous interaction metaphors like zooming and scrolling for interacting with information objects, whereas the user interface adapts itself to ease interactions by observing interactions; deriving based on the interactions activities of a user that gathers and classifies users' behavior; deriving related information objects and their transients; and visualizing these identified information objects.

## Description

This invention concerns a user interface for coordinating actions in a set of distributed fluctuating environments like a network-centric environment. Especially the invention provides a method for visually structuring information objects supporting network-centric information management.

Network-centric operations are a new military doctrine of theory of war. Network centric operations seeks to translate an information advantage, enabled in part by information technology, into a competitive war fighting advantage through the robust networking of well informed geographically dispersed forces. This networking combined with changes in technology, organization, processes, and people may allow new forms of organizational behavior. Information sharing enhances the quality of information and shared situational awareness. Shared situational awareness enables collaboration and self-synchronization, and enhances sustainability and speed of command. The new forms of behavior are partially realized in a technique for visually structuring information objects supporting the full range network-centric information management.

Network centric warfare in the military domain is very similar to enterprise application integration using workflow techniques in the civil domain. Enterprise application integration introduces the concept of a system of systems by means of service oriented architecture, see http://en.wikipedia.org/wiki/Service-oriented architecture. It is an evolution of hard wired interfacing and combination of separate sensors systems, command and control systems, and effectors to service composition and orchestration to reach enhanced situational awareness, rapid target assessment, and distributed weapon assignment even in a very obscure and unknown environment.

Improved situation awareness is a key concern, promising to deliver strategic advantages in a variety of general collaboration scenarios. Improved situation awareness can benefit operational effectiveness by facilitating the planning process, improving the quality and timeliness of decisions, and providing better response regarding the immediate and the strategic consequences of any actions.

It is known that realizing situation awareness could be reached by capturing a context. Context originated as a term from computer science is sought to deal with linking changes in the environment, which are otherwise static. Although it originated as a computer science term, it is applied to business process issues. It follows the idea that the system can sense and react based on the business process context. This means a flexible reactivity using process and workflow design which have been proved successful in context-aware pervasive, ubiquitous systems.

The need for improved situation awareness is particularly important when one considers the increasingly sophisticated technological backdrop. The advent of network-enabled capabilities and the growth of the Internet as a medium for information dissemination afford great opportunities for situation awareness, but it also presents some new and distinct challenges.

One major problem relates to the need to distinguish relevant information from background noise. Another relates to the need to carefully filter incoming information streams based on the knowledge and information requirements of different information consumers.

Further problems relate to the rate of information dissemination in today's media-intensive environment. The concern is that the dynamics of the information and situation picture may result in the differential prioritization of problem-solving goals. When goal switching is mandated by changing operational commitments then different subsets of information will need to be dynamically integrated or aggregated to support changing situation awareness concerns.

Therefore the definition of a "common relevant operational picture" (CROP) as a single identical display of relevant operational information, e.g. position of own troops and enemy troops, position and status of important infrastructure such as bridges, roads, etc. shared by more than one command was established. A standard common operational picture facilitates collaborative planning of operations and assists all echelons to achieve situational awareness. http://en.wikipedia.orgi/wiki/C41STAR an explanation in the domain. There is no clear vision or picture what a CROP is about.

There are efforts like the Multilateral Interoperability Program (MIP) to assure the capability for interoperability of information to support combined joint operations. The NATO Data Administration Group cooperates with the MIP's Data Modeling Working Group in building exchange standards like the Joint Command, Control and Consultation Information Exchange Data Model (JC3IEDM) or the Command and Control Information Exchange Data Model (JC2IEDM). And the standard for Information exchange should enable coordinating interactions; see http://www.mip-site.org/ failing to address the semantic gap between the underlying formal model and a user's interpretations. On the other hand there are services for semi structured information like Yahoo's Correlator capable of extracting and organizing information from text, and searches for related names, concepts, places, and events to your query.

The currently used approaches to establish common operational picture make either use of a shared repository, sharing the same standardized defining scheme, as MIP does, or using a shared process description and present contained objects and resources by the usual graphical user interfaces comprising the user interfaces like the one based on e.g. http://en.wikipedia.org/wiki/Swing_(Java).

Process descriptions and workflows have due to their generality no immediate influence on user interface development. For integrating two environments enterprise information techniques, see
hftp://en.wikipedia.org/wiki/Enterprise Information Integration, are applied to reach a consensus for the format, representation, meaning, and exchange of data. For reaching a system of systems currently the state of the art comprises a set of enterprise application integration techniques, see
hftp://en.wikipedia.org/wiki/Enterprise Application Integration where the user interface is in the most cases realized as a portal, see
http://en.wikipedia.org/wiki/Enterprise portal using the same interfaces.

Process descriptions are used to identify a meaningful interoperation in a common workflow that is derived at development time which is finally mapped into an execution. Enterprise application integration as well as enterprise information integration lack on synchronization of usually occurring complex ad hoc activities. That's the demand in today's multi-propose environments. Usually there are multi purpose applications like e-mail clients which can receive messages about any topic, editors that are suitable to write descriptive data like text about anything or browsers that allow exploring structured information etc.

User interfaces, especially those who rely on highly structured information and metadata being entered and maintained by the users, fail because most users do not spend this additional effort. A user interface reflects immediate benefit to a user and it is crucial that they are easy to use and do not constrain the user in his work. This immediate benefit to the user is more likely to be experienced where users manage their resources like in the setting of a desktop environment. The interoperability requirement in a network centric environment makes it likely that personal views also benefit shared knowledge bases on a larger scale once it is integrated in their every-day activity.

Fine-grained content structures are typically more complex compared to plain text or classical hypertext structures. Even with the relatively simple structures in classical hypermedia, i.e. interlinked information objects on the granularity level of whole documents, users often get "lost in hyperspace" when browsing without additional navigational help. This stresses the need for user interfaces that facilitate navigation and authoring of such structures without losing orientation.

Human sense of orientation is highly optimized for orientation in a 3-dimensional world and on large plains and not for path finding through complex hypertext maze or abstract formal structures. Using graphical environments for structuring external-ized knowledge enables users to use highly efficient sense of spatial orientation on his knowledge space. Allowing users to spatially arrange information items may enhance the link between their mental and external models because it enables the use of diagrammatic depictions whose obvious structure corresponds more closely to the structure of the content. This helps the user to intuitively grasp an overview of the subject matter. Unlike text, diagrammatic knowledge representations carry a structural analogy to the content they represent. Textual representation takes a longer way in the user's mind until it can be related to the user's mental model. In the paper "The eyes have it: A task by data type taxonomy for information visualizations", Ben Shneiderman identifies the following seven tasks to derive suitable user interfaces
- Gain an overview of the entire collection
- Zoom in on items of interest
- Filter out uninteresting items
- Select an item or group and get details when needed
- View relationships among items
- Keep a history of actions to support undo, replay, and progressive refinement
- Allow extraction of sub-collections and of the query parameters.

A remaining problem is to coordinate collaborate activities and presenting not only the results but the transient information to reach a common understanding.

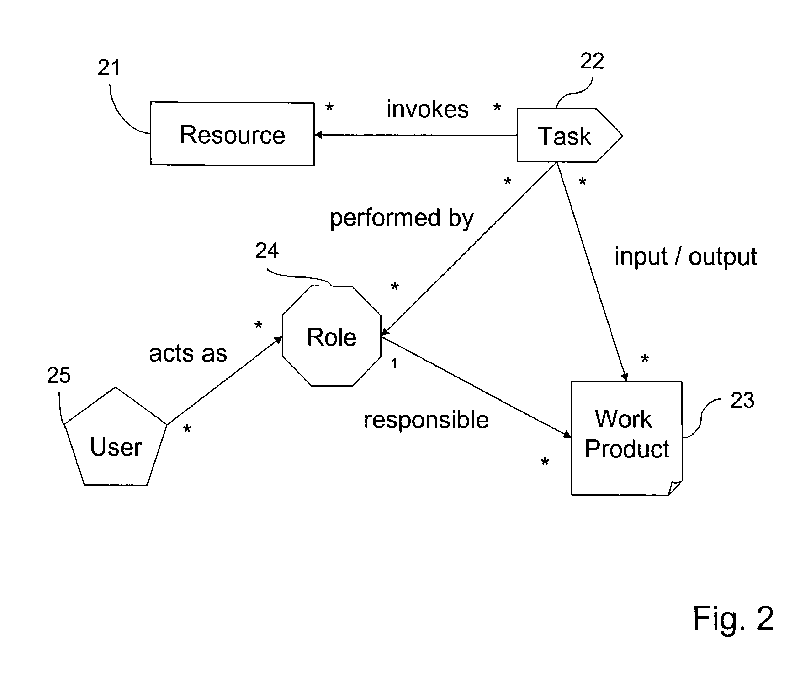

In the following a simple exemplary process Meta model is used in Fig. 2. A Process model allows declaring a process as a complete and integrated approach for performing a specific job. Usually such a model comprises atemporal methodological parts as highly re-useable information like for example the definition of roles, tasks, work products, and their associated relationships. A process has also temporal parts for example life cycle or a workflow, i.e. the arrangement in time of the atemporal parts. Let work products, i.e. artifacts, represent the tangible things used, modified, or produced by a task. Roles use work products to perform tasks and produce work products in the course of performing tasks. Work products are the responsibility of a role. There might be several types of work products like an artifact, i.e. managed item, a deliverable, requested by some role, or an outcome, i.e. an intangible result of a task to enumerate a few. Let a task be an assignable unit of work. Tasks are performed by roles. Tasks have a clear purpose, and comprise a performable step-by-step description of the work that needs to be done to achieve a goal. Tasks modify or produce work products but tasks itself do not define when they are performed. A work sequence is a relationship of performance of tasks in which one depends on the start and the finish of others. A work sequence determines a static execution order.

Most real processes comprise complex activities being too variable to be automated by means of a finite description like predefined workflow or a fixed dialog. Activities cuts across boundaries; the assembling of different teams; people switch roles and move on and off teams; coordination, tracking, and decision making. This cannot be managed by static execution orders that are based on a misunderstanding of the notion role.

Roles in the above sense define a set of related skills in a context like competencies and responsibilities. Roles are not individuals. But people might play multiple roles and they even switch roles. Roles perform tasks, and roles are responsible for work products. Thus, a role becomes a set of connected behaviors, rights, and obligations performed by people in a social situation, i.e. in the real workflow execution.

In contrast, the term role is mostly defined as an expected behavior in a given individual social status and social position. The term role is used in two rather different but related senses. It is vital to both functionalist and interactions understandings. The functionalist approach sees a role as the set of expectations that are placed on an individual. By unspoken consensus, certain behaviors are deemed appropriate and others inappropriate. Roles can be semi-permanent, or they can be transitory. In the functionalist conception, role is one way in which individual activity is socially regulated: roles create regular patterns of behavior and thus a measure of predictability, which not only allows individuals to function effectively because they know what to expect of others, but also makes it possible to make generalizations about society. Collectively, a group of interlocking roles creates a social institution. In interactions social theory, the idea of role is crucial. The interactions definition of the term role predates the functionalist one, but is more fluid and subtle.

A role, in this conception, is not fixed or prescribed but something that is constantly negotiated between individuals in a tentative, creative way. Novices e.g. imitate the roles of the people around them and try them on to see how well they fit and finally they will adapt on an experts behavior

This is always done in an interactive way: it's not meaningful to think of a role for one person alone, only for that person as an individual who is both cooperating and competing with others. Every person behaves similarly by taking roles from those that are seen around them, adapting them in creative ways, and (by social interaction) testing them and either confirming them or modifying them. Automated business processes thus require spontaneous fluent adaptability although it does not serve. This spontaneous behavior is captured as activity notion.

While e-business can enhance business processes, business information exchange, and even pre-defined workflows, the people themselves who conduct the non-routine, value-added cognitively creative work that cannot be automated. Most knowledge work is collaborative, informal, and situational adaptive. Thus people request for and use flexible generic multi purpose tools, such as document editing tools, email, chat, phone, and shared repositories that they themselves integrate in their personal activity.

To reach a common relevant operational picture it remains to capture the philosophical insight of a role interaction into a technical solution of a network centric environment. Some of the challenges to situation awareness can be addressed by a combination of semantic technologies and advanced modes of information visualization and user interaction.

For the sake of simplicity exemplary three domains are assumed: A physical domain, where events take place that are perceived. Data emerging from the physical domain is transmitted through an information domain. Data is subsequently received and processed by a cognitive domain, where it is assessed and acted upon in collaboration.

Net-centric interoperability is not reachable by predefining variants of workflow when the execution underlies a higher uncertainty and variance. Current systems command and control system provide definable workflows for repetitive procedures but when dealing with unexpected behavior, the operational context of a pre-defined workflow is left and replaced by a toolset of supporting applications: calendars, e-mail threads, audio conferencing, maps etc.

To enable coordination of spontaneous interactions in a set of fluctuating environments a conceptual framework of unifying activities is developed and presented by a user interface in an intuitive and ambient way.

Using an activity notion has the advantage and the hypothesis is that a platform for explicitly representing activities as personal, operational, and social structures will provide benefits, from productivity and coordination to organizational learning and adaptation.

Because the approach is rather dynamic it is configurable and hence widely reusable. This means implemented functionality dealing with activities is per se generic and can be re-used within multiple applications which in turn make it feasible to develop a user interface for it.

It is further mentioned that the approach enables to capture a notion of relevance that is linked to an activity. The solution extends naturally and canonical to interactive exploration and simulation. And this is important for large scale integration since then simulation components become independent from the integration which minimizes integration effort.

For a user the claimed method allows process improvement through experience and information sharing between persons that performed similar activities i.e. that played similar roles and this even without knowing their roles.

The approach is quite intuitive and users are expected to appreciate the design.

Role and activity inference and role dependent presentation enables dynamic coordination and optimized usability, where the advantages are based on the explicit generic shared operational (interaction) semantics enabling interoperation. Formalizing the behavior allows to conclude about the intension and to recommend successful behavior and in advance to adapt the user interface.

Explicit interaction semantics spans a variety of domains like interruption management, agile improvement, and social computing, creating a new generation of collaboration.

The objects of the invention are described out in the following by relating the traditionally applied technologies and methods with the invention, and how their application will result in a computer software product according to the invention. These and many other objects and advantages of the present invention will become apparent to those of ordinary skill in the art from a consideration of the drawings and ensuing description, where
- Fig. 1: shows an exemplary business process Meta model according to prior art;
- Fig. 2: shows the standard method and a resulting architecture when transforming a process description into a process execution according to prior art;
- Fig. 3-6: shows transition diagrams of objects activities where the invention is based on;
- Fig. 7: shows a standard model view control architecture according to the prior art;
- Fig. 8: illustrates the impact of the standard model on metaphors of a user interface in the prior art;
- Fig. 9: shows the architecture of an application according to the invention;
- Fig. 10: shows the architecture of a system (of systems) according to the invention;
- Fig. 11: illustrates a metaphor for realizing a user interface for a system according to the invention;
- Fig. 12: illustrates a metaphor for realizing a user interface showing the dependen- cies in a system according to the invention;
- Fig. 13: illustrates a metaphor for realizing a user interface showing the temporal relationships in a system according to the invention;
- Fig. 14: illustrates a metaphor for realizing a user interface showing the spatial- temporal relationships in a system according to the invention.

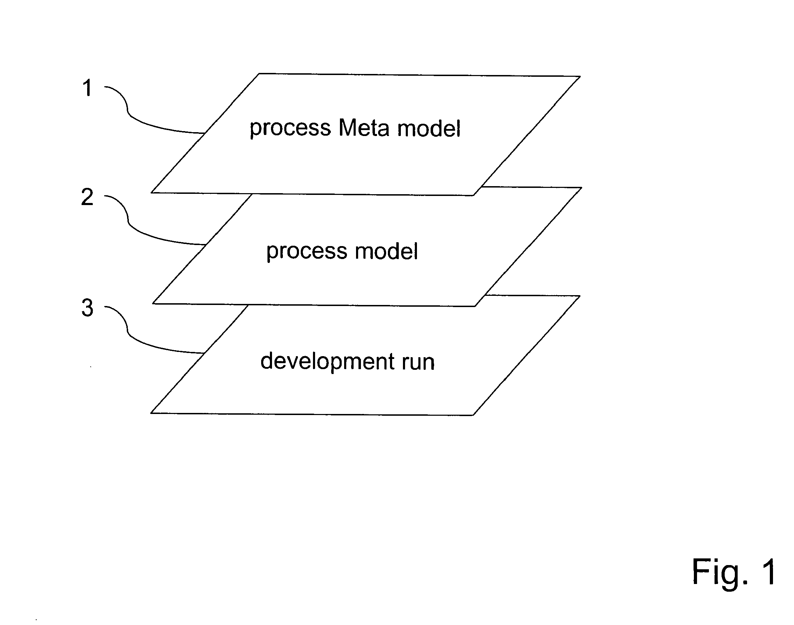

Fig. 1 shows layers of a business application integration according to prior art. Business process modeling 2 represents both the current and future processes. Current processes may be analyzed and improved resulting in unified more efficiency and high quality processes. In the prior art a three step approach of abstraction is followed to ensure high reusability. First process Meta modeling 1 for the analysis and construction of models is applied. These Meta models might be domain specific and the effort of domain modeling 1 is enabling for creating flexible process models. The resulting Meta process model is instantiated in process modeling 2. This process model is translated into development runs 3, i.e. application or device development supporting the analyzed process and including as standard components workflow engines, application reuse, and especially the use of user interface components.

That means identifying a process and the process interrelationship to other processes is defined and developed and not experienced. It is roughly said an plausible assumption which is used to optimize a business process and to derive requirements and constraints on the invoked technical artifacts like systems or applications. The result is linked together to support the optimal process run, i.e. a workflow, using the standard portfolio of especially user interfaces usually served by some portals generated by standard user interface builders.

Fig. 2 shows the above described exemplary relational business process Meta model. There are resources 21 that are invoked by tasks 22. The tasks 22 have inputs and have outputs which are work products 23. Tasks 22 are performed by roles 24, and a specific role 24 is responsible for one or many work products 23. Users 25, i.e. human actors, act as or within roles 24.

The resulting standard architecture when following the prior art in transforming a process into a process execution system comprises a repository of all Meta model instances like a whole business processes, artifacts of any kind such as working results, and resources of any kind that might be invoked in an execution of a workflow. From this repository collaboration agreements are derived that control the execution to be in line with the implemented optimized processes where the resources correspond to information, services, or applications.

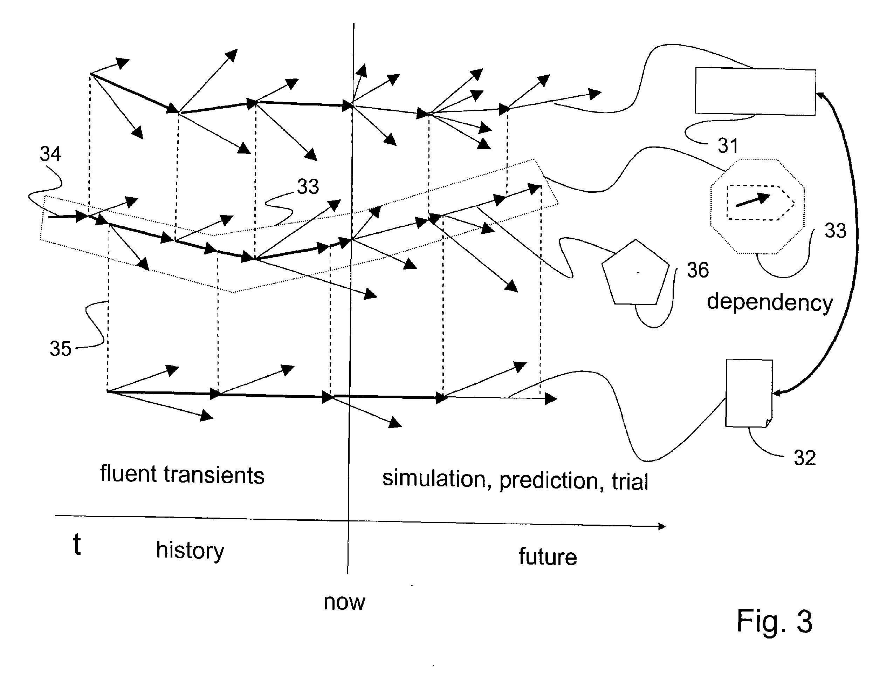

Modeling a process corresponds to a predefined unfolding of Meta process model instances in time t as it is shown in Fig. 3. As soon as a user's interaction deviates from the one defined by the workflow, the assumed global state, which is well defined by the workflow, becomes inconsistent because the construction is not designed and intended for arbitrary interaction. Implicitly, a global state is enforced by updating either a state that is communicated to all applications, like a central database, or a deviate state is stored locally that contributes to a local deviate state. In other words, the well defined execution determines the reachable and thus well defined states of the system.

It is an essential observation that each application or each system spans its own context inside an environment. For instance on a usual personal computer it is not possible to compute inside a word processor, application; therefore a calculator application is required; and if the operating system, the environment, provides such functionality, then the applications has to use the corresponding API or by an extra workflow cutting out the to be computable thing, paste it into the calculator, and back pasting the result of the computation. The boundary between the two application environments is crossed by cut and paste and the context of the word processor is the observation that there is a string cut out and replaced by another.

The problem becomes more difficult as soon as the involved objects evolve and their states interact. Imagine in the example that there are two authors. Then applications have to manage cooperation. This forces a bunch of applications spawning repeated application contexts for coordination. This becomes unfeasible in a network-centric environment.

In design of data models of operational stores this problem was circumvented by avoiding e.g. functional dependencies and elimination anomalies using normalization techniques and transactions. This is not enforceable in a network-centric concurrent environment.

The distributed fluctuating environments are coordinated by capturing interaction, e.g. the interactions with an application etc. An interaction is evaluated inside an environment, and enforced changes of a model are either completely or partially communicated to other environment, explicitly, such that the environments keep track about the transitions of invoked objects. Activity descriptions are explicit descriptions of an activity and enable capturing transitions in an environment. Thus activity descriptions can be used to coordinate environments by considering and synchronizing related activities, hence forcing cooperation of involved environments.

An environment in the above mentioned sense is defined as the population of computational entities on a computer system that are accessible by means of computer networks as resources.

The term intrinsic denotes a characteristic of some thing which is essential and specific to that thing, and which is wholly independent of any other object, action or consequence. A characteristic which is not inherent is extrinsic. An environment deals only with intrinsic elements although there is a trend in making intrinsic artifacts extrinsic.

Activities cuts across boundaries like business functions; the assembling of different teams; people switch roles and move on and off teams; coordination, tracking, and decision making. Call the activities that really happened, a practice. There is a serious need to evolve practices to effectively reuse gathered experiences in similar situations.

Fig 3 shows on the left hand side the transients of the objects, i.e. instances from the Meta model shown in Fig. 2 that are shown on the right hand side. These transients, i.e. state changes that occur in time are shown by arrows, one history or sequence for each of the objects 31, 32. An activity pattern 33 corresponds to a sequence of consecutive activities 34 occurring repetitively. Each activity 34 in the sequence corresponds to a user interaction where some object like a resource 31, or a work product 23 is touched. This is shown by the dashed lines 35 visualizing the originator of the transients of the invoked objects 31, 32. The whole execution graphs, i.e. the transients visualize the evolution of an object where an arrow corresponds to an evolution alternative. For the sake of complexity only the decision path is shown with the proceeding alternatives. Each arrow corresponds to an evolution increment, i.e. a transient, meaning some modification of the object or the activity performed by a user 36. Each transient begins and ends at a certain subject state. In a certain state there are sometimes alternatives, i.e. the fan out of a state might be larger than only one alternative.

Some kind of rather agile business processes require support that does not inhibit its informal and locally adaptive nature. The key distinction and abstraction is a generic notion of human collaborative activity, based on the hypothesis that an explicit shared representation of activity is needed. And the generality of the transients allows handling each of the transients by the same method.

An activity description explicitly articulates a user's interaction and interactive roles involved, the resources used, the results produced, the events it is bounded by, and its relationships to other activities such as part-activities or dependent activities.

All people involved share the activity descriptions as a kind of fluent checklist and they might modify and extend the descriptions. Different people, resources, and events are associated with each of the activities and sub-activities. The people involved might alter sub-activities and add sub-sub-activities as needed to help coordinate the team's response in a specific case.

A simple realization of an activity as an object might have a constructors like 'Activity.create', 'Activity.delegate', 'Activity.decompose'. Beside that an activity might have execution methods like 'Activity.invoke(object)', 'Activity.continuewith(activity)', 'Activity.continuations', etc. which implicitly describes a transition.

Any transient object as e.g. an activity could make available generically the transition path by 'object.continue(transition)' which performes a state change of the object according to the transition, 'object.transitionAlternatives():collectionOfTransitions' returning alternative transitions that are possible in the current state, 'object.retractTransition()' that restores the state before the last transition, and 'object.currentState()' providing the current state of the object. Such an object knows its own evolution. This is an object property that is worth realizing inside metaobject protocol.

The dynamic relations between objects could also be realized in such a way: 'object.relate(object, relationKind)' which relates the current object with another object with respect to an kind, i.e. some formalized aspect. This contributes to the state of an object. 'object.disrelate(object, relationKind)' does simply the reverse, and 'object.relatedObject(relationKind):collectionOfobjects' returns all related objects with respect to a kind. This is about the plain old object relation which if not already available inside an object environment could also be realized inside metaobject protocol.

In a synchronized collaboration a shared activity representation enables to concentrate and adaptively organize work around dynamic activities instead of guiding and limiting people by redefined rather static workflows, tools, or artifacts.

Explicit transitions, i.e. activities, serves keeping track the temporal aspect of involved objects such that a the execution becomes transparent.

At a certain time t, say'now', a user 36 can decide which activity he follows by some interaction, extending the users activity transient. Thus, the relationships on the transients glue together the activities, the invocation of resources 31 and the evolution of work products 32. This creates transparence to a user by showing the consequences of the selection of an alternative instead of limiting the alternatives in order to control and limit a user.

The explicit history, shown by excerpts of transition graphs for each object which allows simulate, predict or explore the behavior of a resource and the evolution of a work product. When a user follows a different activity the effects can be computed, and if the user accepts a resulting state, the activity or activities the lead to the state can be confirmed. Each transient might be simulated or predicted correspondingly which corresponds to a graph exploration of a finite directed acyclic graph.

Generically formulated passive objects could simulate their own state by a simulation of behavior attached to the object e.g. by a simulation model based on the states of the related objects 'object.relatedObject(relationKind):collectionOfobjects'. This could be realized as: 'object.simmulate():transition' which results in a simulated transition. The simulation models could be evaluated recursively. This could be realized by a guiding means end analysis or even by recursive search like breath first search or some branch and bound procedure like A* search.

The result is a state change of the whole collection of objects that predict a future state by explicit simulated transitions. Interactive objects like activities could serve investigation by trail and error approaches, e.g. by graph exploration while simulating passive objects. Alternatively, embedded means-end analysis is applicable.

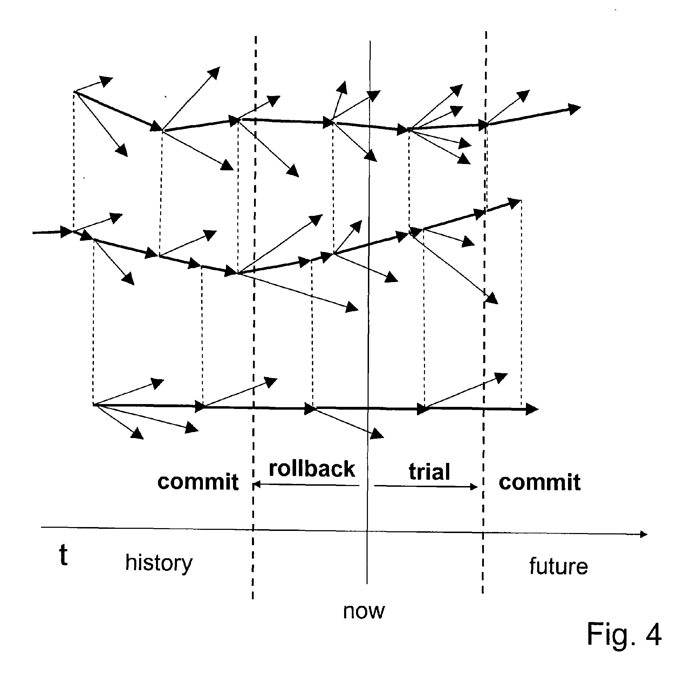

For back tracking as illustrated in Fig. 4, i.e. rolling back an action the states of related objects have to be restored by propagating the rollback, recursively. That can be realized by a recursive rollback method in the above meta object notation 'object.retractTransition() by retracting the invoked kinds 'object.relatedObject(relationKind):collectionOfobjects.forAll.retract' recursively for the collection. This can cause a domino effect that might be controlled by visualizing the impact of a rollback. If an related transient is affected this might even stop the domino effect and initialize an activity for resolving the rollback conflict.

Activity descriptions give references to all the people and resources needed to carry out activities and reflect the current state of the related people and resources, to guide, support, and coordinate work, but not overlay constrain it. Shared activity descriptions are guides to action, but the people are in control, determining whether sub-activities are in work and modifying activity descriptions to adapt to a current situation 'now'.

From a user interface perspective this is reached by providing a single place to manage the whole range of activities that allow investigating impacts of interaction. Shared activities are created by different systems and by other people, as well as by oneself. Having one place to collect and organize all of one's activities provides a higher-level view for reflection for e.g. planning, prioritizing, and negotiation, to capture, reuse, and evolve best practices in activity patterns. Activity patterns 33 correspond to the functional notion of a role, i.e. a chain of activities that represent the behavior of a user 38.

In addition constraint resolvers like the public domain ECLiPSe Constraint Programming System (http://www.eclipse-clp.org/) become applicable that limit the execution by constraints on activities, performers, and all invoked objects or resources.

Activity patterns 33 can be identified and evolved by analyzing the variations of the instances based on systematic observations. This integrates the dynamic informal personalized business activities with the predefined workflow-driven business processes.

Explicit activities support unified interaction and presentation of the business activities, adequate and ambient to a user, enabling different systems to interoperate, even semantically, enabling the evolution of business practices. Activity descriptions are treated as Meta data tying together system resources around the generic implicit operational semantics of activities.

The Semantic Web is an ideal platform to provide the flexibility, extensibility, and data integration necessary to support the inherent variability and adaptability of activities. It is suited for developing ontology of unified activity. The core ontology might capture the essential features and structure of the generic idea of collaborative activity, which enables activity-like information from different applications and contexts to be unified, exchanged across systems and organizations, and is able to present a consistent vocabulary to people.

The activity approach provides a semantic for effectively extending systems with the intelligence, adaptability, and creativity of knowledgeable and experienced workers by leaving the degree of freedom to select their transients.

Sharing and presenting explicit transients with their relationships allows people easily sharing a variety of collaborative objects and to aggregate them into activity threads and putting activity metadata over these threads, enabling people to create and evolve activity patterns. Because of the canonically induced dependencies that are made explicit activity ontology is a unifying semantic standard that will enable systems at different organizations to interoperate through the exchange of their activity ontology following a vision to leverage semantically rich Web Service descriptions to make activity patterns discoverable.

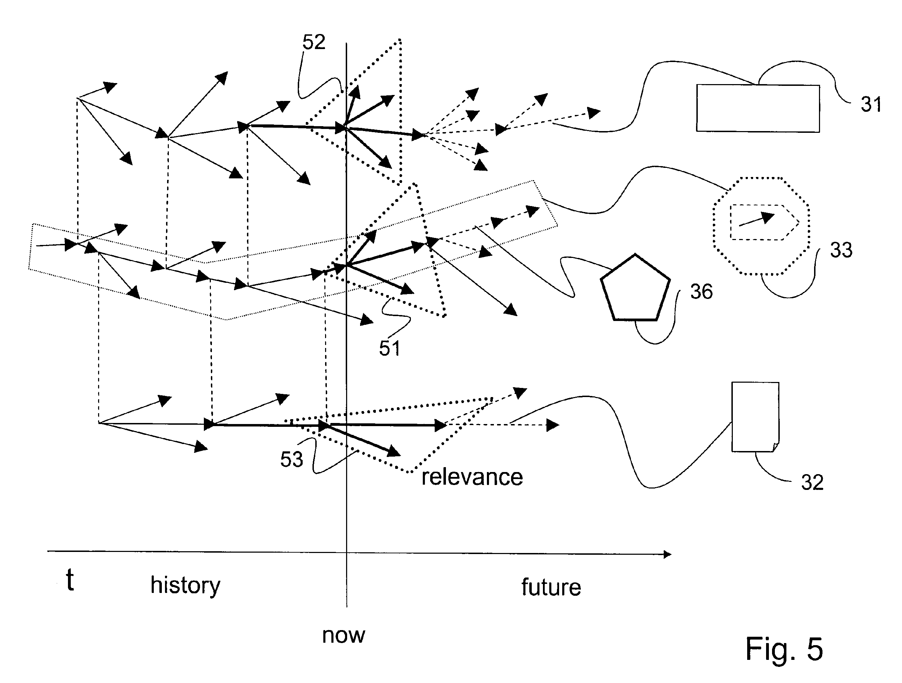

Fig. 5 shows how relevant object could be inferred using the explicit transients and dependencies. At a certain time 'now' relevant objects for some activity are the immediate extensions 51 of the transition paths which are shown as bold face arrows. These correspond to the alternatives at that time that are regarded as possible. Starting from that activity there are related objects 31 and 32 that can be retrieved by following the induced relationships shown by the dashed lines. These objects are transient, i.e. the relevant state of that object is the state at the certain time'now'. And the relevant alternatives 52 and 53 of these objects are the continuations of transition paths . The set of relevant objects can be enhanced by investigating transitions in future, shown by the dashed arrows, which either can be made based on activity patterns or on simulation and planning methods for discovering impact of decision for a continuation. Since this approach for identifying relevant objects is independent from the Meta model it can be realized independently and is reusable for all transient objects to be handled.

This could be formulated as a method of object that collects of first order related transients e.g. by
'currentActivity.continuations';currentActivity.relatedObject(relationKind) over some relation kinds. This could be enhanced by iterating over the related objects which corresponds to a breath first search over the induced relations.

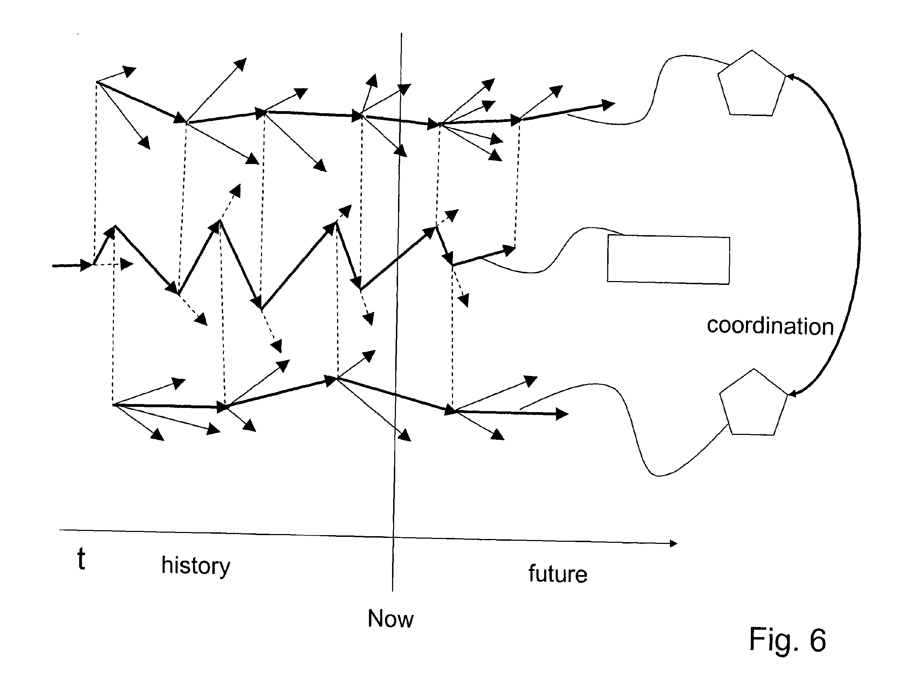

A business processes can have access to activity descriptions and can monitor the progress of ongoing renegotiations. Further, a rich store of detailed renegotiation activity descriptions can be analyzed for ways to improve the accessing process. Effectively incorporating semantically based support for collaborative business activities qualitatively enhances the adaptability of the semantic of interactions. Such a conflict scenario is exemplary illustrated shown in Fig. 6.

Another example concerns workplace collaboration. Workplace collaborators make use of diverse types of documents and other resources. Traditionally, each type of document has been stored in its own repository, and people have had to manage multiple documents or records in multiple storage services even in multiple environments.

Workplace collaborators have usually complex, ad hoc working relations that are partially executed through their shared documents. Traditionally, dependencies among documents and other objects have gone unrecorded, or have been stored in a piecemeal manner inside the documents, or have been objectified and rigidified in workflow engines. Workplace collaborators often need to coordinate with one another, both asynchronously and in real-time, and often in the context of their shared documents. Traditionally, people had no idea of the status of their collaborators, or they have had to consult other, unrelated services for awareness or presence information about their colleagues.

As soon as two collaborators share an object they become aware of each other and of the evolution by the explicit transitions. The system becomes enabled to unify the ways that people collaborate with and through shared documents need to be described without having storage or an application context. This enables unified activities by a service that collects shared documents, fine-grained access control, persistent communications, and real-time status information of each object. This serves diverse needs of a workplace of individuals, teams, and communities. Activity exploration enables the harvesting of collective enactments, and their crystallization into work practices templates and rich placeholders for future collaborations.

This kind of collaboration coordination requires adapted presentation and interaction mechanisms. Using a variety of knowledge, visualization, and interaction techniques result in advantages that are expected from transparent collaboration scenarios by means of activities. The benefit will be improved operational effectiveness by facilitating the planning process by providing the timelines from the activities. This in turn enables an improved feedback regarding the strategic consequences of activities.

Especially in a reactive context like the military domain the described framework creates a common awareness of the temporal unfolding of events like the displacement of military assets and the ability to anticipate actions of other (sometimes competing) agencies serve to the realization of operational objectives. Organizing objectives as activity allows discriminating real operational relevant information.

The explicit activity descriptions enabling distinguishing relevant information, captured behavior of different information consumers, activity patterns which are interpreted as interactive roles require a high level of abstraction from a user and need to be realized in an easy user interface.

Worries relate to the rate of information dissemination in today's media-intensive environments. The concern for instance is that the dynamics of the situation picture may result in the differential prioritization of problem-solving goals. When goal switching is mandated by changing operational commitments then different subsets of information will need to be dynamically integrated or aggregated to support changing situation awareness concerns.

These challenges to situation awareness at least for the military contexts can be resolved by a combination of activities and advanced modes of information visualization and user interaction where the visualization is disclosed elsewhere. In such a system ad hoc activities become even tradable and measurable in terms of effort, e.g. value of related objects and elapsed time.

In case of the incorporation of several activities or resources explicit transitions can be used to try out an option and if the common result is acceptable one might commit and perform the transaction. If in the meantime something has changed there might be a derivation form this common result, but then a user might rollback the made choices and restore the effects. This is possible by propagating the rollback, recursively. In a new approach a user might then choose another activity. Preferably, a trail does not reserve resources as it is done usual ly using a two phase commit protocol or by non pre-emptive scheduling. It is intended to point out and make collaborating investigable by providing rationales in conflicting cases Semantically enriched information supports a variety of reasoning and inferential processes, and these have the potential to assist the user regarding information triage and the execution of knowledge intensive tasks. But this complex information needs to be communicated and understood by a user.

An essential term for discriminating and presenting information is relevance: Relevance most commonly refers to topical relevance or about-ness, i.e. to what extent the topic of a result matches a goal. Relevance can also be interpreted more broadly; referring to generally how good retrieval matches a need. The latter definition encompasses topical relevance and possibly other concerns of the user such as timeliness, authority or novelty of information. Relevance is highly context and user dependent. The problem is to identify on what, or to be more precise, on which use context.

The above described method provides a mechanism for discriminating and a visualization for representing relevant information for an activity or a part of a set of trajectories, and for enabling rapid access to relevant information content in large scale, distributed information environments. In essence, semantic technologies or inference in general providing the basis for semantic annotation schemes that facilitate adaptive modes of information aggregation in support of goal-relevant processing, a critical element of enhanced situation awareness.

A user interface is the primary medium for information transfer, and therefore the basis for initial stages of situation awareness, i.e. the level of perceptual cognition; the features of the display device can also exert a significant effect on the depth to which situation relevant information items are processed by human end-users. In addition, the user interface often serves as an important adjunct to temporally extended bouts of problem-solving activity. The user interface affords a number of opportunities for end-user interaction with a system and this permits a user to progressively restructure information content to better suit their idiosyncratic perceptual and cognitive capabilities.

The prior art consists of a large set of user interface resource, e.g. the web site of the user interface design group of the Massachusetts Institute of Technology Computer Science and Artificial Intelligence Laboratory, see
hftp://groups.csail.mit.edu/uid/. There, one can find rescores for a lecture on user interface design and implementation, see
http://courses.csail.mit.edu/6.831/readings.shtml.

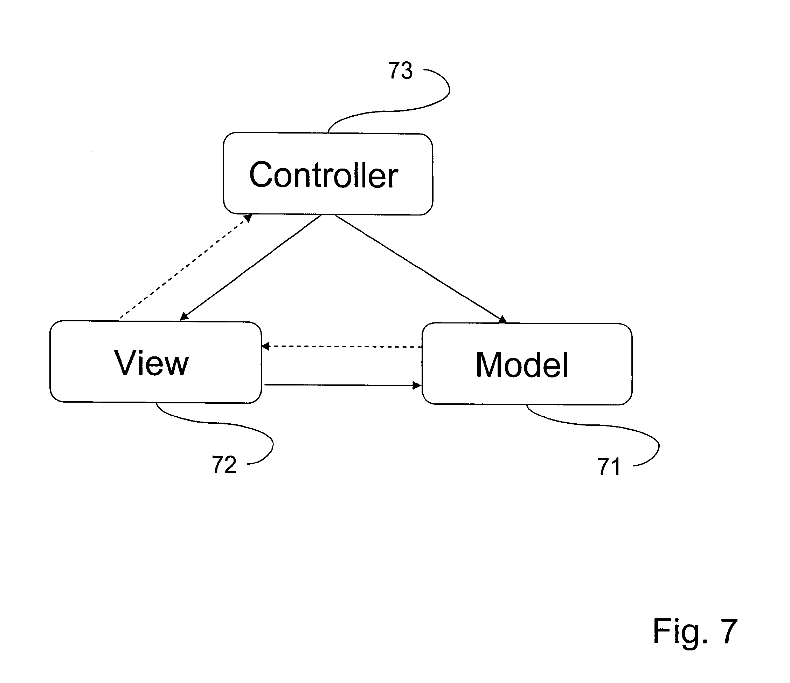

Fig. 7 shows a standard model view control pattern that enables a user to manipulate a view. A controller object 73 receives the event and interprets it in an application-specific way. This can be to request a model object 71 to change its state or to request a view object to change its behavior or appearance. The model object 71, in turn, notifies all objects who have registered as observers when its state changes; if the observer is a view object 72, it may update its appearance accordingly. In other words the presentation and the control that made up interaction means of the user interface do not know about the interaction context.

A central topic about designing user interfaces covers important design principles like learn-ability, visibility, error prevention, efficiency, and graphic design and the human capabilities that motivate them including perception, skills, vision, attention, and human error. There are established techniques for building user interfaces like the model-view-controller pattern that yields to about similar usual widget set layouts and constraints that are now known since the first Smalltalk or LISP environments. Since the Web browsers underlie similar constraints, the user interface has there also not impressively changed since the appearance of the first web browsers.

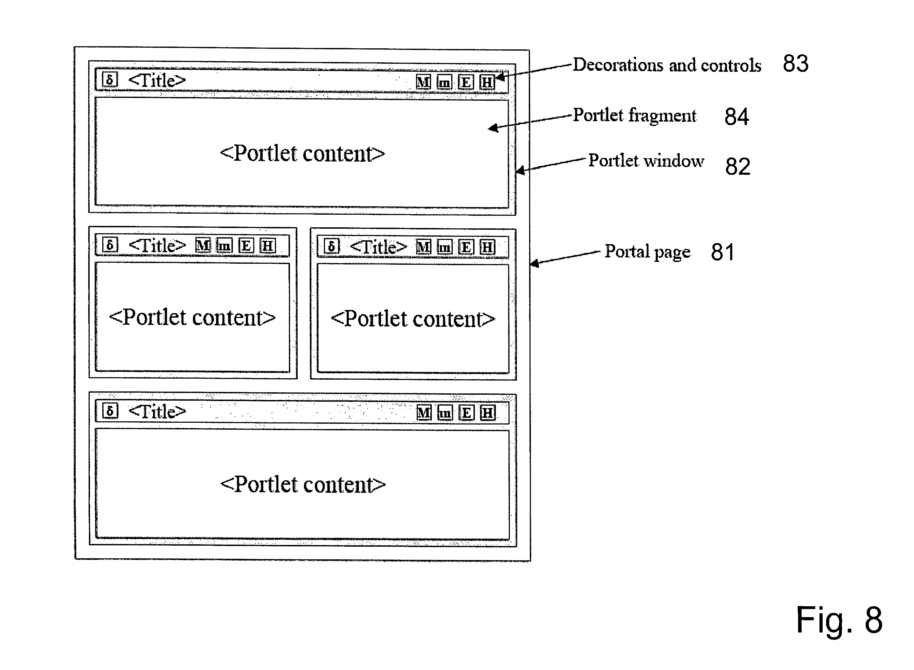

So the model view control pattern has lead to interaction metaphors that are widely applied and migrated in several environments like desktops, handhelds, or portals. And that is the reason for recognition. For instance a portal page 81, as shown in Fig. 8 are composed of windows 82, where each window as usual in desktops etc. has decorated controls 83 manipulating the associated portlet fragment 84.

The most important measurement of a user interface is usability. As soon as multiple users become involved in an activity of a user the complexity of the user interface increases compared to its usability. Voyagers and Voyeurs: Supporting Asynchronous Collaborative Information Visualization by Jeffrey Heer, Fernanda Viégas, and Martin Wattenberg, Computer/Human Interaction 2007, illustrates this and lays out some techniques to overcome this complexity by mechanisms for asynchronous collaboration in the context of information visualization, recasting visualizations as social spaces, supporting asynchronous collaboration across a variety of visualization types.

A solution to the outlined problem could not be based on the model view controller pattern since it merely separates user interface from application model concerns. But the outlined problem could be solved by a generalization of that user interface, i.e. by a method for coordinating user interactions by providing a user interface comprising uniform presentation and interaction objects reflecting a model of information objects of a software system or a system of systems. The presentation and interaction objects provide homogenous interaction metaphors like zooming and scrolling for interacting with information objects where the user interface adapts itself to ease interactions by observing interactions; identifieation based on the interaction activities of a user gathering and classifying users' behavior; deriving related information objects and their transients; and visualizing these identified information objects.

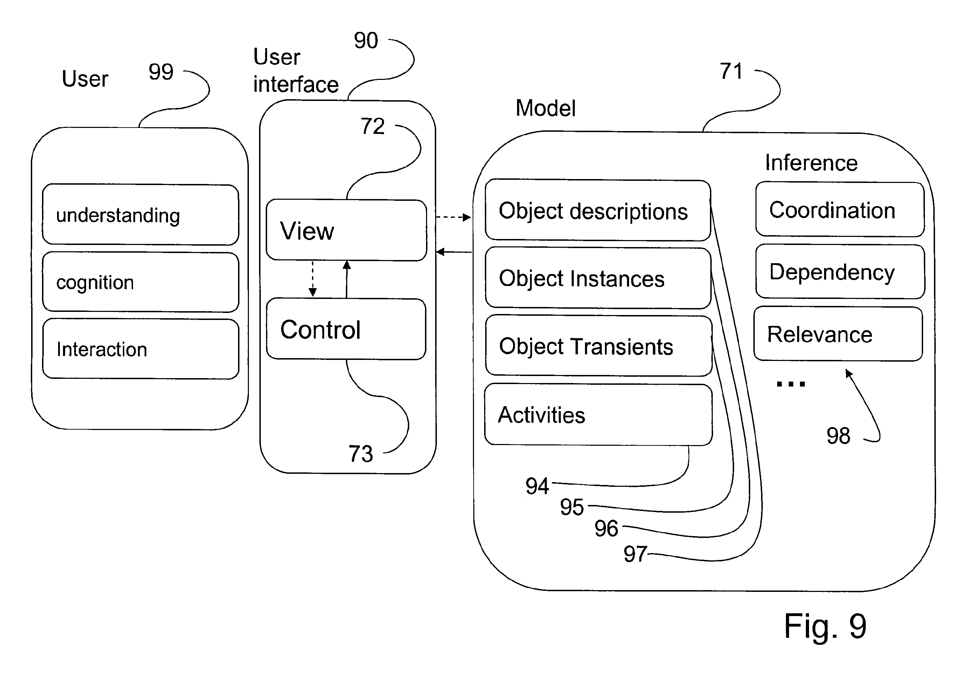

Fig. 9 shows candidate architecture of an user interface according to the invention. The model semantic is generically encapsulated by the above described information objects constituting the model. These information object instances 96 have descriptions 97, transients 95, and related activities 94 which generically allow creating a user interface 90 by the known view 72 and control 73. But with the side effect that a user 99 needs only conceptually understand and recognize the generic model parts. Each object instance could have its dedicated interaction but remains in the generic context realizing an inspection metaphor. The user interface 90 itself can make use of the above mentioned inference techniques 98 to provide coordination, to explore induced dependencies or to isolate relevant objects.

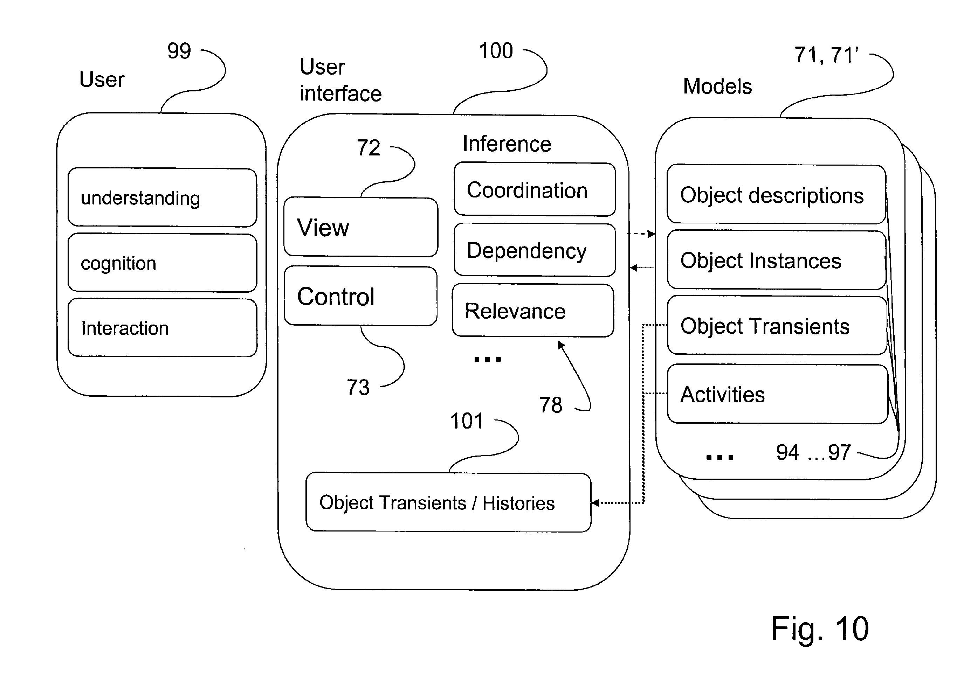

Fig. 10 shows architecture for a composition of multiple models 71, 71' of a multi purpose user interface according to the invention. In this case the side effect that a user 99 needs only conceptually understand and recognize the generic model parts is advantageously shared between the multiple models 71, 71'. The user interface 100 make use of the above mentioned inference techniques to provide generic coordination, to explore induced dependencies or to isolate relevant objects 78 which can be performed not independently but generically, i.e. uniformly, for information objects of the models 71, 71'. View 72 and control 71 are also treated generically. Treating the model generically is especially enabled by considering explicit information object transients or at least a part of these transients 101 within the user interface 100 or by respective service invocation providing the information object transient 101.

Preferably information objects are embedded in synchronized virtual spaces showing specific information aspects.

These virtual spaces could comprise a spatial map of locations embedding information objects reflecting locatable objects, an event space embedding temporal information objects visualizing their evolution, and a semantic space embedding information objects. The virtual semantic space could be rendered as a plain and the event space could be rendered as a time line. Transients of an information object could be presented synchronized with a position in the event space. Transient of information objects reflecting locatable objects might be represented by parts of apertures of their trajectories in the spatial map.

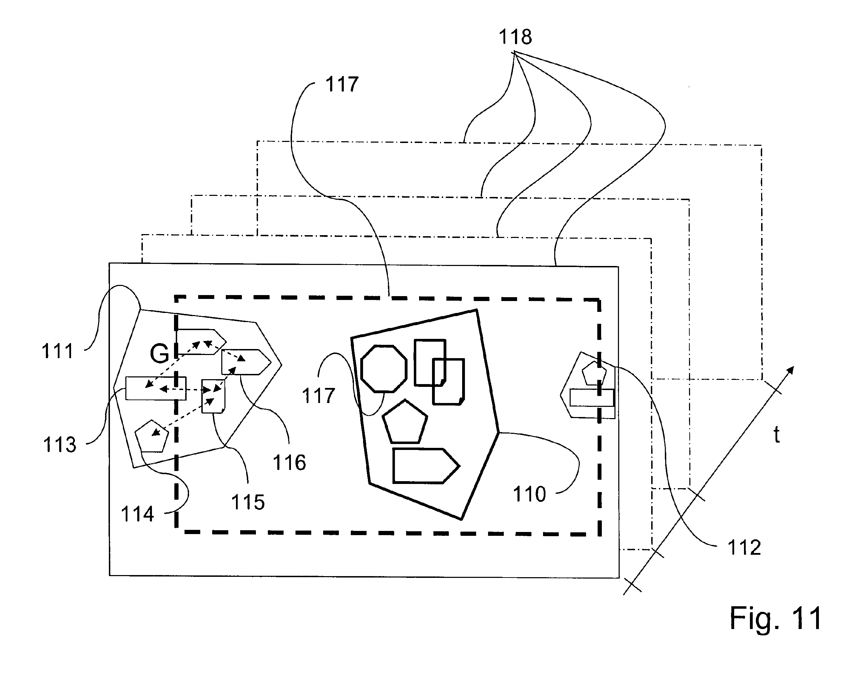

Fig. 11 illustrates a semantic space of a multi purpose user interface according to the invention. Preferably, the semantic space comprises a depth orthogonal of the plain representing time t, where temporal information objects occupy a unique position 112 on the time axis t representing the time of latest interaction.

Social connections could also be handled as information objects in this setting as shown by the octagons 117, 114. Collaborating simultaneously could happen in the virtual semantic space by sharing information objects, and recombining the information objects from the network using induced relationships.

Preferably the user interface adapts the identification of activities and related information objects to the users' physical, emotional, and interaction role context.

Preferably information objects 113, 114, 115,116, 117 are placed in part automatically and in part by the user to create harness human spatial and visual memory to ease recognition and recall and semantically coherence such that clusters 110, 111, 112 of information objects communicate strong semantic affinity or close induced relationships. Information objects 113, 114, 115,116, 117 might have a kind of gravity like interaction G determined by the induced relationships such that when a new information object enters the semantic space, it is automatically placed according to these gravitational influences G, illustrated for the cluster 111 by the dashed arrows.

It is noted that the shapes of information objects are consistent with the ones shown in Fig. 2

A user, e.g. represented by the pentagon 114, should be able to manipulate information objects 113, 114, 115,116, 117 by invoking functionalities provided by an information object and a user can move the presentation of the information object around the semantic space.

Preferably, opacity and transparency communicate an information object's relevance to a current activity context, such that non-relevant information objects literally become invisible, when context is changing, the relevance of objects changes, and their opacity shifts smoothly accordingly.

Induced relationships with other information objects should be explorable by visualizing related information objects on demand.

Information objects preferably should be tag-able to supply a shared ontology of information objects. Preferably, a user or the system can tag even a cluster of information objects, influencing semantic analysis.

The virtual space should preferable be stretchable or compressible. Stretching could be done by the user interface when the user focuses on a cluster of information objects and a user should remain able to zoom and scroll the virtual space. A user should also be able to move a view port, shown by the dashed rectangle, around on a virtual space and, preferably, signposts around the edges of the view port indicate contextually relevant information objects out of view in that direction.

Preferably, the information objects are instantiated from Meta objects of a Meta model as the one shown in Fig. 2. Such a Meta model might comprise Meta objects for people 114 with their interaction roles 117, activities 116, locations, events, and resources 113.

Preferably, the user interface is equipped with a generic, multipurpose text entry interface additional interaction metaphor which preferably appears as overlay and which preferably can be invoked in any context supporting context sensitive text entries.

And preferably, the user interface comprises an area for stacking of information objects such that a user can drag information objects from a virtual space and drop them into the area. A user might be enabled to populate custom virtual spaces comprising information objects, the custom virtual spaces being itself an information object. Therefore, the user interface might comprise an area for stacking virtual spaces on a private navigation space.

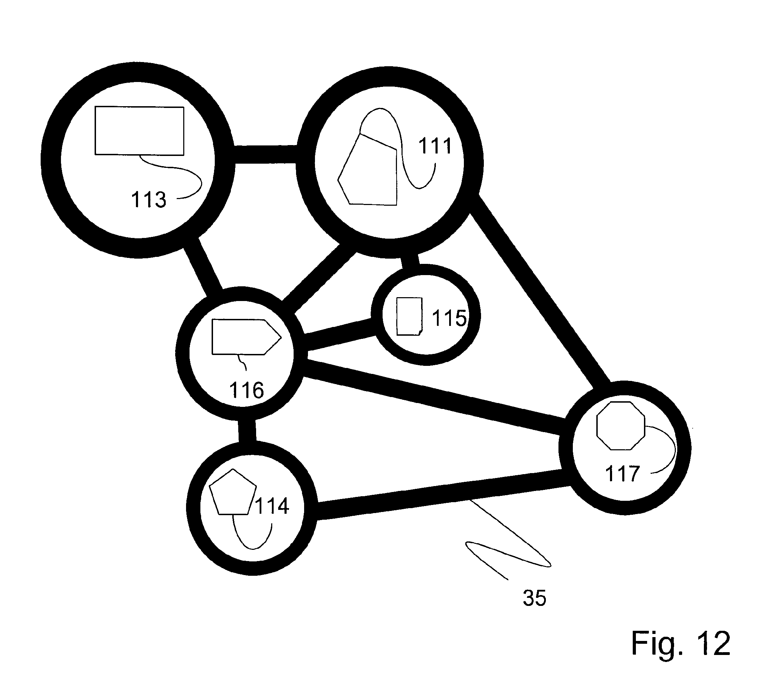

Fig. 12 illustrates a metaphor for realizing a user interface showing the dependencies in a system. This is a space that makes the induced relationships 35 between the information objects transparent. It could be visualized as the semantic space shown in the previous figure.

Searching for an information object preferably is performed within the semantic space and matching results appear opaque or have a distinctive visual highlight; objects that do not match the search are transparent, searching for the information objects coordinates spaces by arranging matching information objects and by compressing the virtual spaces appropriately, so that a small result set spanning a long stretch of time and distorting the geometry of the semantic space to provide a view broad enough to encompass the entire retrieval. A network service might store the entire trajectories of the information objects.

Preferably, a user can explore interaction by trail - commit or roll back metaphors. An aggregated information object might provide the ability to interact directly with the parts of the information object as it is illustrated by the Kripke like diagram in Fig. 4.

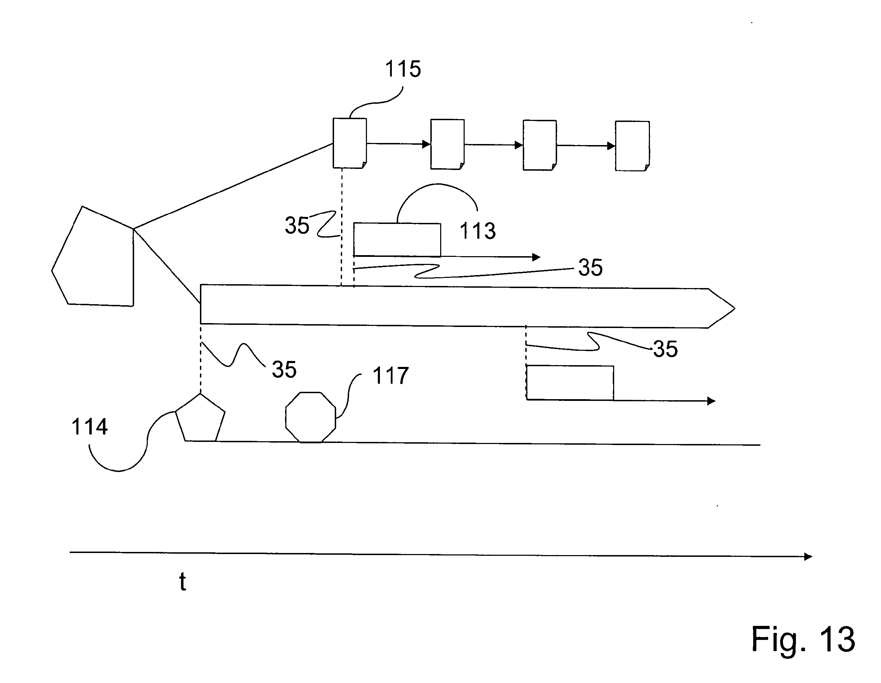

The aforementioned event space is the preferred presenting virtual space visualizes the evolution on a time line t as shown in Fig. 13. On this time line the same information objects are visualized by their validity intervals or their evolution. The activity for example in the centers relates to an evolving work product 115, to some resources 113 that is invoked for some time, to a person 117 that is involved, and a role 117 that is identified for that person.

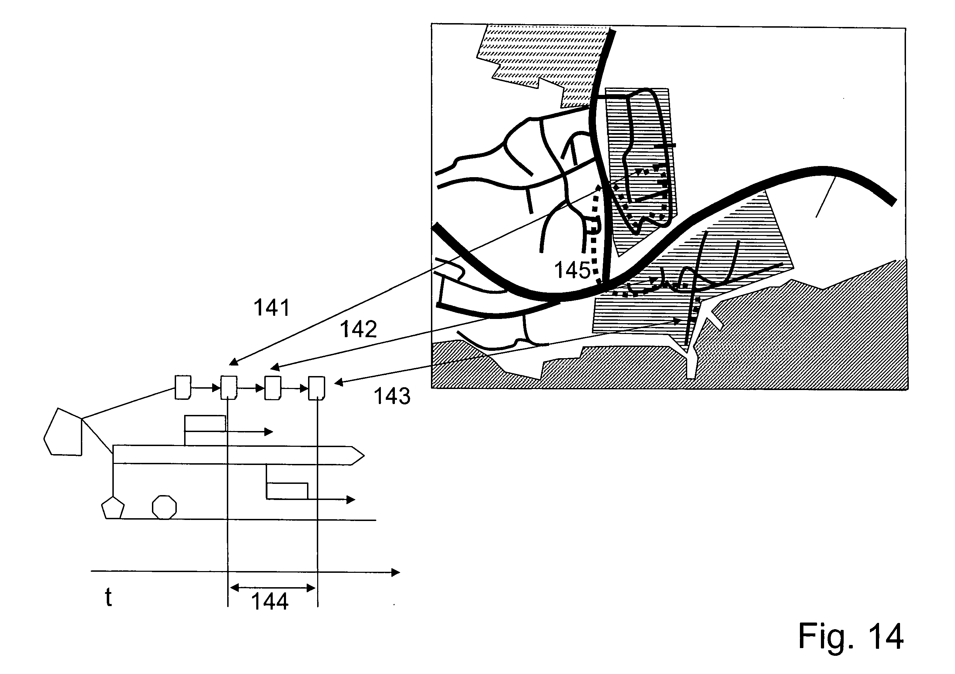

These virtual spaces could comprise a spatial map of locations embedding information objects reflecting locatable objects as it is shown in Fig. 14 by the map in the upper right rectangle. The user interface can coordinate these virtual spaces when the information objects are tagged with the respective information. Then a change of an location tag is reflected by both a transient in the event space as well as by a trajectory in the spatial map. If an information object reflects a continuous moving locatable object like the person or the work product in the figure before, each time on the time line t corresponds to a position in the map illustrated by the arrows 141, 142, and 143, and an interval 144 corresponds to a continuous trajectory 145.

It is preferably intended to provide on several interaction devices continuation of users' experience using similar - scaled - virtual spaces as area of continuity of the users' experience.

According to the above disclosed method a multi purpose user interface comprising programming means that are suitable to carry out the method solves the outlined problem. And in consequence complex systems comprising such a multi purpose user interface solve the outlined problem, too.

The following description lines out a design of a browser client that is suitable for net centric operations and where the net might evolve. Essential guiding elements are context awareness, natural interaction, continuity, and user collaboration beside the Shneiderman tasks.

A browser as a multi purpose user front end has the potential to know about activities of a user. Not only does the browser touch every aspect of activities and social connections. The browser knows the data that flows through it being semantically rich. If the browser as a user interface pays attention to all that data moreover pays attention to users' behavior as users interacts with that data, it could find patterns and adapt itself to ease the difficulty of managing our interactions. If the browser has the ability to be aware of users' physical, emotional, and interaction role context, the possibilities expand even further. And that is exactly what the above described object transitions serves.

Most of interaction with technology involves levels of abstraction. Interaction objects like menus, links etc. are denotational objects bearing little resemblance to real ones because these objects result from available widget sets which form an interaction and view repository. Dealing with these abstractions is cognitively hard work for a user. The brain interacts better with a familiar system being the basis for all good interaction metaphors. Hence the proposed user interface leverages natural interactions, with objects in space or those with a sense of physics to them, e.g. by a spatial view with simple homogenous interaction metaphors.

Another aspect of the spatial view is the area of continuity of the users' experience. It is not feasible to design different interfaces for desktop, handheld, or wall-mounted devices. One single, consistent interaction model should apply no matter what size screen, or what means of interacting with the device like mouse, touch screen, gesture controller, etc. at disposal.

The user interface according to the invention is basis of a real multi-user application inside some network. The network is something that people use together. But applications like desktops, browsers, editors, etc., have historically been single-user applications and the activity context is carried inside the application context.

A user interface built according to the invention provides a platform for much of the functionality one now sees being re-implemented and reinvented on a site-by-site basis or by browser extensions like browser add-ons that let users keep track of what their associated or related users are doing online and share new and interesting content with one or more of them.

Collaborating simultaneously in a common space, sharing information with others, and recombining or remixing elements like activities or work products from the network all become common, assumed functions of this browser.

To present a common understanding everything is considered as an object in space or at least in a virtual space having a transient. Virtual objects subsume the real objects. Real objects could be embedded easily in a map like in http://maps.google.de/ where the trajectories, i.e. movements correspond to the transitions, while the virtual ones do not embed so easily in a virtual space.

Positions in the virtual space have meaning where the presented x and y axes map out a semantic space, generated in part by the browser and in part by the user.

The display plane is not meant to be a perfect semantic visualization - semantic space is multi dimensional, and there are only two dimensions. And the semantic graph visualization is not so useful since it concentrates a high complexity and requires a high level of abstraction using exploring metaphors or facet browsing. The two axes of the plane seem to be sufficient to create harness human spatial and visual memory to ease recognition and recall. Let the depth of the view, i.e. the orthogonal of the virtual space represent time. Objects farther away from the viewer are further in the past down the time scale. Each object occupies a unique position on the time axis, and every position on that axis is occupied by something. Users cannot move objects directly along the time axis since their position reflects the last user's interaction with the object. Similar visualization is known from http://www.apple.com/macosx/features/timemachine.html. The time scale should preferably not be linear; objects far away should move toward the user much more quickly than close objects.

The semantic space allows users to visually scan large numbers of nearby objects while in motion, but keeps the distant end of the time axis from becoming too distant. Objects that have been invoked in a current activity are considered active. The active set comprises the present end of the time axis. When objects leave the active set, e.g. when the user closes them or switches to another activity, they begin to recede down the time axis. Note that they might even evolve while receding, e.g. by another activity thread.

Opacity and transparency communicate an object's suitability or relevance to the current context. Every object communicates the relationship it can have with any other object. Data and presentation objects that can integrate tightly can be grouped for use as a single object.

Groups of objects, i.e. clusters, are made automatically by the system to communicate strong semantic affinity or close Meta relations according to the induced activity originated relationships.

This structure might be edited or tagged by a user. The user should also be able to create groups of their own (semantic affinity or not) for any purpose. Users should be able to create clusters either directly, by pushing objects closer together, or indirectly, by e.g. editing an object's Meta data, which will cause the object to be repositioned by the system. Either the user or the system can assign a name to a cluster, which influences semantic analysis.

To alleviate crowding, the plane should be stretchable or compressed by the user. Objects retain their relative size (determined by their position along the z axis), but their relative placement on the plane is distorted uniformly and linearly along both axes spanning the plane. Stretching may also be done by the system when the user focuses on a cluster. This corresponds to the usual zooming and scrolling metaphors that are well known e.g. by http://maps.google.de/.

This distortion causes the plane to expand beyond the view port; therefore, users can move the view port around on the plane. Derived signposts around the edges of the screen might indicate contextually relevant clusters out of view in that direction.

Hence, there is a combination metaphor of zooming and scrolling in the virtual space like in zooming and scrolling on a map which is considered very intuitive and sufficient.

Objects preferably have a kind of gravity like interaction e.g. determined by the above mentioned induced relationships. Semantically similar objects are drawn toward one another, and their gravitational influence is compounded. As new objects enter the space, they are automatically placed according to these gravitational influences.

For example, a webpage that is semantically similar to more than one cluster might be placed between the two clusters on the plane; if one cluster is significantly larger than the other, the new object would be placed closer to the larger cluster etc.

There seem to be several classes of objects as illustrated in the exemplary Meta model. The Meta model could serve for a generic definition of the presented objects. The most important seem to be people with their interaction roles, the activities, places, and resources referring the above mentioned objects.

People model a collection of contact information, but they also maintain a rich, semantic history of communication and collaboration with that person, visitable by the induced relationships. Some data within a person may be live data shared by that person, either privately to specific people, in small, restricted groups, or publicly, e.g. as a feed. Other data within a person object may be appended by the user.

Activity objects are a collection of collaboration information as described above. They correspond to timelines of interaction of people, i.e. their activity transients. Real locations are clearly presented by maps using the usual interaction metaphors as Google Earth does.

There are at least a few information object types: Data objects being repositories of structured data. Interaction objects can operate on data objects. Presentation objects might offer user interfaces or direct-manipulation visualizations for data sets and functionality. Credentials objects might be specialized data objects that are used for authentication and authorization, etc. Induced relationships glue the object types together and form a concrete and explicit context. These objects may have different metadata schemes according to their class. Users might even extend any object's metadata scheme and assign their own metadata to objects.

Every kind of object preferably has the same standard set of interactions performed with it, regardless of its class. Objects can be collected into a group, added to or removed from an existing group, inspected, invoked, and moved around in the plane. Invoking data objects displays and/or makes their data editable. Invoking presentation objects allows the user to select presentation formats. Invoking a person displays that person's feed of shared objects; invoking a place opens an active network connection to that resource and becomes manifested as an activity.

Beside the direct manipulation metaphor of zooming, scrolling, designating, selecting, and spawning it is suggested to add a generic, multipurpose text entry interface. From there a user can enter, invoke, or inspect objects by name, perform searches, use commands, jump to a point in the spatial view, add metadata to objects, and create text data objects simply by entering plain text. Preferably, such an additional interaction metaphor appears as an overlay and can be invoked in any context limiting the possible commands.

User should be able to populate spaces and being enabled to stack spaces. Any space can be placed there in any order. This is intended to provide rapid access to frequently used items. A user can push a space on his space stack. When the user navigates from one space to another, the earlier spaces goes to this stack. This user stack enables users to perform complex tasks involving multiple users without leaving the present context.

To explore a space a sub spec selector should define the view pane. A scroll bar metaphor could be used for that indication the objects in the space creating the sense of a large wheel curving away from the user, only part of which is within the user's field of view. Preferably users can scroll, inspect, open, close, and switch among objects using the sub space selector. By grabbing and throwing the edge of the wheel, users can quickly scan very large sets of information objects. The wheel is preferably circular such that objects that disappear from one side will reappear on the other if the user continues in that direction. The most recently accessed object, or the one currently being accessed, should occupy the center position when the frame is invoked. An alternative metaphor would be a large desktop tiled into selectable sub-desktops that are connected.

To manipulate or act on an object in any way other than simply moving it around the semantic space, the user pulls the object into their range of action. The range of action lies between the user and the frame, so that users can pick up objects from the semantic space and drop them into the frame.

Most user actions that don't involve direct manipulation of objects are accomplished through context menus. Some actions invoke panels: small, focused interaction components that enable the user to select for the action.

Workspaces are collections of objects that are displayed simultaneously within a layout created by the user. Objects within a workspace can expose objects to one another, enabling users to assemble components into an integrated display that essentially functions as a single application.

A search takes place within a semantic space or might initialize a new semantic space containing all the relevant objects. Relevance ranking like in Google Search is not required, but a relevance threshold might be reasonable, e.g. the closure depth of the composition of induced relationships.

Matching results appear opaque and/or have a distinctive visual highlight; objects that do not match the search are transparent, nearly invisible. Every item occupies a unique point on the time axis; however, in search, the objects in question are only valid results. This has the effect of compressing the time axis, so that a small result set spanning a long stretch of time. Additionally, the plane initially distorts to provide a view broad enough to encompass the entire result set, but not broader. The plane can be further distorted by the user as usual to enable easier visual identification of individual results on the respective device.

Throughout the semantic space, the user can also focus on a cluster, causing it to be presented in a manner identical to search results (effectively, performing an implicit focus for all members of the selected cluster). Such a focus might also be established through an activity that is rational of a cluster. This enables aligning view ports.

In the semantic space, distance communicates time, but opacity communicates contextual relevance. If something isn't relevant to what you're doing right now, it literally becomes invisible. When context is changed, like moving from a one theme to another, e.g. a collaboration activity, the relevance of objects changes, and their opacity shifts smooth accordingly.

After years of high-performance graphics processors being specialized tools for games and 3D artists, the development are starting to discover the power of these processors for other applications. Apple has applied animation, transparency, and other visual effects for years to give OS X its high-gloss sheen. These graphics capabilities meant the experience could be more dynamic and visual than today's application. The biggest affect concerns augmented reality. This gap is closing between the net and the world. Services that know where you are and adapt accordingly will become commonplace. The network then becomes fully integrated into every physical environment.

Data abundance would have another deep impact on the user interface. There's more data available to us all the time both the data we produce intentionally and the data we throw off as a product of other activities. The network and the collaboration using activities will play a key role in how people access, manage, and make sense of all that data.

Finally there is an impact of virtual identity and identity abstraction. People are increasingly expected to have a digital presence, i.e. an interaction role, as well as a physical one, i.e. a functional role. Spaces and the creation of personal expression and participation in the digital realm will establish new ad hoc generated social structures.

A users' evolved consistent view on the network is always and everywhere available.

With current advances in computational power and limitless storage everything is recorded and available. The network includes entire histories and all saved objects. All of this information is saved to a cloud like the Elastic Service of Amazon where it is available to any other computer devices.

Combining months, years, or even decades of personal history with the context of a device will open the possibility for real insights that help a user make the most of their surroundings. Similarly activity patterns might be extracted from that cloud.

Simply authenticating with a new device provides users with instant access to the last state of their browser. The user interface will appropriately render the network to fit the device, everything from tiny screen on a watch to a wall-sized touch-screen due to the unifying spatial view.

The visual aesthetic should convey lightness and simplicity. The layout should feel clean, open, with an expansive three-dimensional space. The spaces reflect events unfolding in real time. Archived items are presented at a distance while current items appear immediately in the foreground, suggesting time and space. Objects invite to grab them and are governed by real world physics with responsive feedback. A user should be able to grab, drag, and drop in three-dimensional space. Objects are floating subtly in real-time and are seemingly influenced by gravity as well as other objects and time.

Preferably object groups are clustered by relationship and exhibit motion behavior reflective of their association. And colors are used as cues to different behaviors. Highlights of different colors denote notification, clustering, drop zone. Shapes might be used to differentiate objects.

The vast amount of personal information available to the browser will create powerful trend and recommendation engines that applications can use for future activities. For example, a decision that a user made months ago on one computer can instantly inform a network application accessed on a mobile device.

Looking back at the seminal browser Mosaic it is surprising to find that present browsers have not changed much in the last decade. The general functionalities are constructed with similar items such as URI field, book marking, back and forward button. In contrast the envisioned browser provides a less static, more natural interaction and a direct and intuitive way to interact within the net, similar to the way we relate to objects in the real world. Today, the smallest thing on the Internet is a portlet inside a portal or a web page. This is the element that a user can recall, store in a bookmark or forward to another user. Although there are sub-elements of a page such as the text or an image or an embedded video, most users are not savvy enough to deal directly with these. More important, users typically don't care to break sub-elements out of the context of their web page since the usual browser offers no compelling reason to do so.

To change the browser's focus from the page to an object provides users the ability to interact directly with the atomic parts of a given space and offers greater personalization and adaptation.

Users should be able to tear off parts and store them for later use. Sometimes those parts are recognized as people objects and sometimes they are discrete data objects. The objects can be combined with other web pages or other objects.

For the moment the user interface is described as a browser although this browser has not only rendering, presentation, and navigation qualities. It is essential that this kind of browser or user interface or front end learns from Meta data what happens. Therefore using a standard representation of that Meta data is suggested.

RDF can represent data in a distributed way across a network. As such, it forms the basis of a web of data in which anyone can say anything about any topic. Semantic Web is about describing and defining distributed data in such a way that the data can be brought back together in a useful and meaningful way. To put the Semantic Web to work, one needs to describe a high level structure of this Semantic Web application, the components that comprise it, the kinds of input it gets (and from where), how it takes advantage of the resource description framework (RDF), and why this is different from other application architectures.

RDF distributes data as triples. An RDF store is a database that is tuned for storing and retrieving data as triples. Along with the familiar functions of any database, an RDF store has the additional ability to merge information from multiple data sources, as defined by the RDF standard. Closely related to the RDF store is the RDF query engine. The query engine provides the capability to retrieve information from an RDF store according to structured queries.

The browser application has some work that it performs with the data it processes: analysis, user interaction, archiving, and so forth. These capabilities are accomplished using some non-imperative programming language that accesses the RDF store by queries processed with the RDF query engine. Most of these components have corresponding components in a familiar relational data backed application. A relational database itself corresponds to the RDF store.

Parsers and serializer based on the standard representations of RDF are useful for the systematic processing and archiving of data in RDF. While there is considerable data available in these formats, even more data are not already available in RDF. Fortunately, for many common data formats it is quite easy to convert these formats into RDF triples. Data can be mapped into triples in a natural way and the mapping can be applied to relational databases or spreadsheets.

A rich source of data can be found in existing web pages. Such pages often include structured information, like contact information, descriptions of events, product descriptions, publications, and so on. This information can be combined in novel ways once it is available in RDF. There are two different approaches to the problem of using sources for RDF data. The first approach assumes that the original: one might have no interest in or knowledge of RDF, and will create content accordingly. This means that no annotations correspond to predicates and no special structure makes it especially "RDF-ready." The second assumes that the content originator is willing to put in a bit of effort to mark up the content in such a way that besides its use, it can also include information that allows the data to be interpreted also as RDF.

The most hands-off approach to this problem is to use a program called a scraper. A scraper is a program that reads a source that was intended for human reading, typically an HTML page, and produces from it an RDF representation. The name scraper was inspired by the image of scraping useful information from a complex display like a web page. Scraper technology is continuing to develop. An early scraper system called Solvent, which has been developed as part of the SMILE project at MIT, highlights selected parts of a webpage and translating the content into RDF. A new development in webpage deployment is a trend that goes by the name of micro formats.

The World Wide Web Consortium (W3C) has outlined a specification called GRDDL (Gleaning Resource Descriptions from Dialects of Languages) that provides a Standard way to express a mapping from a micro format, or other structured markup, to RDF.

GRDDL makes it possible to specify a recipe for translating HTML data into RDF resources. The transformations themselves are typically written in the XML style sheet transformation language XSLT. Existing XHTML documents can be made available to the Semantic Web by marking up the preamble to the documents with a few references to transformations.

All of these methods that allow an author to include structured information having two advantages over scrapers and converters. First, from the point of view of the System developer, it is easier to harvest the RDF data that were marked up with structure data extraction in mind. More important, from the point of view of the content, it ensures that the interpretation of the information, when rendered as RDF, matches the intended meaning of the document.

In contrast to a relational data store, an RDF store includes as a fundamental capability the ability to merge two data sets efficiently. Because of the flexible nature of the RDF data model, the specification of such a merge operation is clearly defined.

RDF application architecture includes the RDF parser and serializer, scrapers and converters, the RDF merge functionality, and the RDF query engine. These capabilities interact with the application itself and the RDF store.

Once all the required data sources have been scraped, converted, or parsed, the application uses the merge functionality of the RDF store to produce a single, federated graph of all the merged data. It is this federated graph that the application will use for all further queries. There is no need for the queries themselves to be aware of the federation strategy or schedule; the federation has already taken place when the RDF merge was performed.

This architecture is preferred for the claimed user interface. The RDF store plays the same role that the database plays in database-backed portals. It is important to note that because of the separation between the presentation layers, it is possible to use the same technologies for the actual user interface construction as those used in a database-backed portal. However, because of the distributed nature of the RDF store that backs a portal, information typically comes from multiple sources.

The merge capability of an RDF store supports this sort of information distribution as part of the infrastructure. When the browser is backed by RDF, there is no difference between building a distributed web portal and one in which all the information is local.

The strategy of federating information first and then querying the federated information store separates the concerns of data federation from the operational concerns of the application. Queries written in the application need not know where a particular triple came from. This allows a single query to seamlessly operate over multiple data sources without elaborate planning by the query author. This also means that changes to the application to federate further data sources will not have an impact on the queries in the application itself.

The claimed method suggests a lightweight Meta data based integration within the user interface. Current practice is that corporations rely on costly manual code generation and point-to-point translation scripts for data integration. While traditional middleware like web service infra structures simplifies the integration process, it does not address the fundamental challenge of integration: the sharing of information based on the intended meaning, the semantics of the data. That is claimed to be performed by inference.

Hence, ontology as semantic data models can rationalize disparate data sources into one body of information, i.e. a meaningful set of information objects. By creating ontologies for the above described Meta data, scraping content and tagging the Meta data, integration of sources can be performed without disturbing existing applications. The ontology is mapped to the data sources, giving applications direct access to the data through the ontology and allows the user interface as coordinator to infer about relationships.

Of course, one can provide a simple ad hoc integration of data sources by simply writing a translator from one to the other. But this would only solve this specific integration problem, and one would have to do the same again when encountering the next data format. Instead, we might well write domain ontology.

Current information systems are organized mainly along traditional lines or hierarchies: subscriptions to pieces of information. Online availability of these pieces has until now not really changed the organization, i.e. the structure or composition of the information product. Although parts of information products might be independently available, the sole formats in which they appear are collections of them that are organized in one fixed structure. Subscribers can take subscriptions to content, but again these subscriptions are organized according to the traditional fixed structure.

Information is split up into a number of separate categories, say, e.g., air, force army, navy, and each cover one such category or more likely part of one such category. However, with the rapid developments and changes, the traditional division into separate parts covered by distinct structures is no longer satisfactory. Defense organizations might be instead interested in covering certain topic areas that spread across the traditional disciplines.

It is difficult to provide large scale data horizontally. The information is locked inside the separate structures, each with its own indexing system, data structure etc., organized according to different physical, syntactic, and semantic standards. Barriers of physical and syntactic heterogeneity can be solved.

XML format allows cross-structure querying. It is possible to search across multiple structures for parts containing the same keywords, but given the extensive homonym and synonym problems within and between the various disciplines and a quite uncontrolled vocabulary, this is unlikely to provide satisfactory results.

The claimed user interface provides a way to search the various structures on a coherent set of concepts against which all of these structures are indexed.

Ontologies have proved to be a key technology for effective information access because they help to overcome some of the problems of free-text search by relating and grouping relevant terms in a specific domain as well as providing a controlled vocabulary for indexing information. RDF is used as an interoperability format between heterogeneous data sources. Ontology is itself represented in RDF. Each of the separate data sources is mapped onto this unifying ontology, which is then used as the single point of entry for all of these data sources.

The exploration of large information spaces is a difficult task, especially if the user is not familiar with the terminology used to describe information. Conceptual models of a domain in terms of ontologies can leverage this problem to some extend.

In order to be useful, there is a need for interactive tools for exploring large information sets based on conceptual knowledge and the claimed user interface is exactly such a tool.

## Claims

1. A method for coordinating user interactions by providing a user interface comprising presentation and interaction objects reflecting a model of information objects of a software system, where the presentation and interaction objects provide homogenous interaction metaphors like zooming and scrolling for interacting with information objects, **characterized in that** the user interface adapts itself to ease interactions by observing interactions; deriving based on the interactions activities of a user that gathers and classifies users' behavior; deriving related information objects and their transients; and visualizing these identified information objects.

2. The method according to claim 1, **characterized by** presenting an information object embedded in synchronized virtual spaces showing specific information aspects.

3. The method according to claim 2 where the virtual spaces comprises a spatial map of locations embedding information objects reflecting locatable objects, an event space embedding temporal information objects visualizing their evolution, and a semantic space embedding information objects.

4. The method according to claim 3, **characterized in that** the virtual semantic space is rendered as a plain and the event space is rendered as a time line.

5. The method according to claims 2, 3, or 4, **characterized in that** a transient of an information object is presented synchronized with a position in the event space.

6. The method according to any of the previous claims, **characterized in that** transient objects are represented by parts of apertures of their trajectories in the spatial map.

7. The method according to clam 3, 4 ,5 or 6, **characterized in that** the semantic space comprises a depth orthogonal of the plain representing time, where temporal information objects occupy a unique position on the time axis representing the time of latest interaction.

8. The method according to any of the previous claims, **characterized in that** the user interface adapts the identification of activities and related information objects to the users' physical, emotional, and interaction role context.

9. The method according to any of the previous claims, **characterized by** collaborating simultaneously in the virtual semantic space by sharing information objects, and recombining the information objects from the network using induced relationships.

10. The method according to any of the previous claims, **characterized in that** information objects are placed in part automatically and in part by the user to create harness human spatial and visual memory to ease recognition and recall and semantically collocate information objects to clusters that communicate strong semantic affinity or close induced relationships.

11. The method according to any of the previous claims, **characterized in that** opacity and transparency communicate an information object's relevance to a current activity context, such that non-relevant information objects literally become invisible and when context is changing, the relevance of objects changes, and their opacity shifts smooth accordingly.

12. The method according to any of the previous claims, **characterized in that** induced relationships with other information objects are explorable by visualizing related information objects on demand.

13. The method according to any of the previous claims, **characterized in that** information objects can be tagged to supply a shared ontology of information objects.

14. The method according to any one of the claims 2 to 13, **characterized in that** a virtual space stretchable or compressible and stretching is done by the system when the user focuses on a cluster of information objects and a user can zoom and scroll the virtual space.

15. The method according to any of the previous claims, **characterized in that** information objects are instantiated from Meta objects of a Meta model.

16. The method according to any of the previous claims, **characterized in that** the user interface comprises a generic, multipurpose text entry interface additional interaction metaphor which preferably appears as overlay and which preferably can be invoked in any context supporting context sensitive text entries.

17. The method according to any of the previous claims, **characterized in that** searching for an information object is performed within the semantic space and matching results appear opaque or have a distinctive visual highlight; objects that do not match the search are transparent, searching for the information objects coordinates spaces by arranging matching information objects and by compressing the virtual spaces appropriately, so that a small result set spanning a long stretch of time and distorting the geometry of the semantic space to provide a view broad enough to encompass the entire retrieval.

18. A multi purpose user interface comprising programming means that are suitable to carry out the method according to the previous claims.

19. A system comprising a multi purpose user interface according to claim 18.
